# EUROPEAN PATENT APPLICATION

(11) **EP 4 637 052 A1**
(43) Date of publication of application: **22.10.2025**
(21) Application number: 25170634.7
(22) Date of filing: 15.04.2025
(51) Int. Cl.: H04B 10/272, H04B 10/40, H04B 10/50, H04B 10/64

(54) **OPTICAL COMMUNICATION DEVICE, SIGNAL PROCESSING METHOD AND MEDIA**

(30) Priority: 18.04.2024 CN 202410471716
(71) Applicant: Nokia Solutions and Networks Oy, 02610 Espoo (FI)
(72) Inventor: HU, Xiao Feng, Shanghai, 201200 (CN); ZHANG, Dong Xu, Shanghai, 200129 (CN); HUANG, Xiao An, Shanghai, 200000 (CN); ZHANG, Kai Bin, Shanghai, 201204 (CN)
(74) Representative: DREISS Patentanwälte PartG mbB

(57) **Abstract**

Optical communication devices such as optical line terminals, and optical network units, and signal processing methods and media have been disclosed. An exemplary optical line terminal may comprise: an optical carrier generator configured to generate at least a first optical carrier and a second optical carrier; a transmitter connected to the optical carrier generator, configured to modulate a downlink signal onto the first optical carrier to form a downlink transmission signal; and an optical coupler, for coupling the downlink transmission signal with the second optical carrier for downlink transmission. The embodiments of the present disclosure also provide corresponding methods which are implemented at optical line terminals, optical network units and corresponding implementation methods, as well as computer readable media and computer program products.

## Description

### TECHNICAL FIELD

The present disclosure relates to the field of optical communication technology, and in particular, to an optical communication device in a passive optical network, a method for processing signal, and a computer readable storage medium.

### BACKGROUND

The current dominant system architecture for broadband optical access networks is based on Passive Optical Network (PON) access technology. Multiple optical communication standard organizations, such as the International Telecommunication Union Telecommunication Standardization Organization (ITU-T) and the Institute of Electrical and Electronics Engineers (IEEE), have approved a series of PON standards with data rates up to 50 gigabits per second (Gb/s).

In order to meet the exponentially increasing demand for bandwidth by end users, the next generation of optical access network is expected to achieve a data rate of 200 Gb/s to distinguish it itself from the current PON optical networks with a designed capacity of 50G. At this data rate, due to dispersion in optical signal transmission and limited device bandwidth, traditionally used techniques such as intensity modulation (IM) and direct detection (DD) will be unable to meet the power budget constraints of deployed Optical Distributed Networks (ODNs).

The application of coherent optical detection technology in optical access networks has become a research hotspot in academia and industry due to its high receiving sensitivity and spectral efficiency. However, optical access networks are very cost sensitive, and the structure of coherent receiving devices is complex, which will greatly increase equipment costs compared to IM/DD schemes. Therefore, how to reduce the equipment cost of optical communication systems while ensuring coherent detection performance is an urgent problem to be solved.

### SUMMARY

The various exemplary embodiments of the present disclosure aim to address at least a portion of the above-mentioned problems or issues.

According to a first aspect of the present disclosure, an optical line terminal (OLT) is provided, comprising: an optical carrier generator configured to generate at least a first optical carrier and a second optical carrier; a transmitter connected to the optical carrier generator, configured to modulate a downlink signal onto the first optical carrier to form a downlink transmission signal; and an optical coupler, for coupling the downlink transmission signal with the second optical carrier for downlink transmission.

In a second aspect, an optical network unit (ONU) is provided, comprising: a receiver for receiving a downlink signal modulated on a first optical carrier; and a carrier regenerator, for receiving a second optical carrier, and generating a local oscillator signal based on the second optical carrier, wherein the receiver is connected to the carrier regenerator and configured to perform coherent detection of the downlink signal using the local oscillator signal.

In a third aspect, a method for processing signal at an optical line terminal is provided, comprising: generating a first optical carrier and a second optical carrier; modulating a downlink signal onto the first optical carrier to form a downlink transmission signal; and coupling the downlink transmission signal with the second optical carrier for downlink transmission. In some embodiments, the method may further comprise: generating a third optical carrier, and using the third optical carrier to perform coherent detection on the received uplink signal (such as an optical single sideband signal).

In a fourth aspect, a method for processing signal at an optical network unit (ONU) is provided, comprising: receiving a downlink signal modulated on a first optical carrier; receiving a second optical carrier, and generating a local oscillator signal based on the second optical carrier; and using the local oscillator signal to perform coherent detection on the downlink signal. In some embodiments, the method may further comprise: loading an uplink signal (such as an optical single sideband signal) using the local oscillator signal.

In a fifth aspect, an apparatus is provided, comprising: at least one processor; and at least one memory for storing instructions, wherein the instructions, when executed by the at least one processor, cause the apparatus to perform at least the method according to the third or fourth aspect.

In a sixth aspect, a computer program product is provided, comprising (computer executable) program instructions, which, when executed (or run) by a processor, cause the processor to perform the method according to the third or fourth aspect.

The computer program product may comprise or be embodied as a computer readable (storage) medium, on which computer executable computer program instructions and/or programs that can be directly loaded into the internal memory of the computer or its processor are stored.

### BRIEF DESCRIPTION OF THE DRAWINGS

Figure 1 shows a schematic structural diagram of a fully coherent receiver that can be applied to a PON network;
Figure 2 shows a schematic diagram of an optical communication system according to an exemplary embodiment of the present disclosure;
Figure 3A illustrates a schematic diagram of a passive optical network communication system according to an exemplary embodiment of the present disclosure;
Figure 3B shows a schematic structural diagram of a simplified coherent receiver according to an exemplary embodiment of the present disclosure;
Figure 3C shows a schematic structural diagram of a simplified OSSB transmitter according to an exemplary embodiment of the present disclosure;
Figure 4 shows a schematic diagram of a simulation model of a passive optical network according to an exemplary embodiment of the present disclosure;
Figures 5A and 5B respectively show schematic optical spectrum diagrams of the downlink signal and uplink signal according to an exemplary embodiment of the present disclosure;
Figures 6A and 6B show schematic diagrams of coherent detection simulation for downlink and uplink signals respectively;
Figure 7 shows a flowchart of a method implemented at an optical line terminal according to an embodiment of the present disclosure;
Figure 8 shows a flowchart of a method implemented at an optical network unit according to an embodiment of the present disclosure;
Figure 9 shows a schematic block diagram of an optical network device according to an exemplary embodiment of the present disclosure.

The same or substantially the same elements, operations, and steps shown in various figures may be represented by the same reference numerals. For clarity purposes, not every component, operation, and step is shown in each figure.

### DETAILED DESCRIPTION

The exemplary embodiments of the present application will be described in more detail below with reference to the accompanying drawings. It should be understood that the present application should not be interpreted as limited to the exemplary embodiments described herein, but may also be implemented in various other forms, and these exemplary embodiments are provided only for a more thorough and complete understanding of the present disclosure. It should also be understood that the accompanying drawings are provided only as examples and are not intended to limit the precise form of the embodiments or to limit the protection scope of this disclosure.

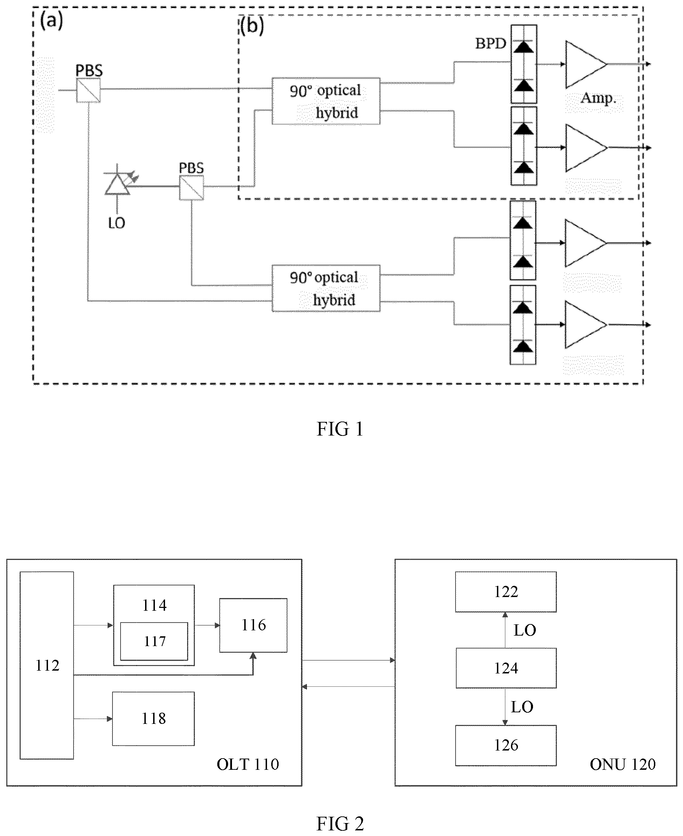

As mentioned earlier, coherent optical detection technology has been proposed to further improve the data rate of PON networks. Although the coherent scheme has advantages such as higher receiving sensitivity, better spectral performance, and ease of upgrade compared to the IM/DD scheme, the corresponding PON network also has problems in terms of cost and power consumption. Figure 1 shows a schematic structural diagram of a fully coherent receiver applied to a PON network. As shown in frame (a) of the figure, the fully coherent receiver consists of a local oscillator (LO), a polarization beam splitter (PBS), two 90° optical hybrids, four balanced photodetectors (BPD), four transimpedance amplifiers, and other components, while the receiver of IM/DD scheme only requires a single preamplifier, an optical bandpass filter, a photodetector, and other components. It can be seen that deploying a PON network using a coherent scheme will greatly increase equipment costs.

By using techniques such as heterodyne coherent detection, the number of elements used in the receiver can be reduced to a certain extent. As shown in frame (b) of Figure 1, this technique can reduce the number of elements by about half compared to the fully coherent scheme. However, it still requires local oscillators of high quality (such as lasers) to output local oscillator light with stable wavelength for coherent beat frequency, which will bring cost and power consumption burdens and make the technology difficult to apply. In addition to requiring more precise components, the digital signal processing (DSP) in coherent receivers will also be more complex compared to traditional PON networks. For 50G PON networks adopting IM/DD schemes, only linear feedforward equalization (FFE) and the like is required for dispersion compensation, while coherent receivers require many complex algorithms such as frequency offset compensation, carrier recovery, in-phase/quadrature phase (I/Q) imbalance compensation, MIMO algorithm for polarization demultiplexing, etc. This will also greatly increase the cost and power consumption of applying coherent detection technology to PON networks.

In view of this, some aspects of the embodiments of the present disclosure provide a composition architecture and corresponding signal processing method for an optical communication apparatus in a PON network. By transmitting an optical carrier for coherent detection of the downlink signal while sending the downlink signal, and then processing the optical carrier on the receiving side of the downlink signal (e.g., an optical network unit ONU) to obtain a local oscillator optical signal for coherent detection, it is no longer necessary to use other expensive lasers to generate local oscillator light in the ONU, thereby eliminating the need for a local oscillator in the ONU, and thereby saving the system cost of the PON network and effectively improving the optical signal processing performance.

Figure 2 shows a schematic diagram of a communication system according to an exemplary embodiment of the present disclosure. As shown in the figure, the communication system can be part of a passive optical network, which comprises an optical line terminal OLT 110 and an optical network unit ONU 120. There can be bidirectional communication between OLT 110 and ONU 120. For example, OLT 110 can send data/signals to ONU 120 through the downlink, and ONU 120 can send data/signals to OLT 110 through the uplink. Although only one optical network unit 120 is shown in the figure, it can be understood that OLT 110 can perform optical communication with multiple optical network units through an optical distribution network (ODN).

As shown in Figure 2, the optical line terminal OLT 110 comprises an optical carrier generator 112, an OLT transmitter 114, a coupler 116, and an OLT receiver 118. The optical carrier generator 112 is used to generate optical carriers (or simply referred to as carriers) after power on, and provide corresponding optical carriers to the OLT transmitter 114, coupler 116, and OLT receiver 118. Preferably, the optical carrier generator 112 is an optical frequency comb generator that can provide multiple tones or optical carriers. In an example, the optical carrier generator 112 can generate a first optical carrier, a second optical carrier, and a third optical carrier with different frequencies or main wavelengths, which are respectively provided to the OLT transmitter 114, the coupler 116, and the OLT receiver 118.

The OLT transmitter 114 is connected to the carrier generator 112 and can receive the first optical carrier from the carrier generator 112. At the same time, it receives the downlink data signal to be transmitted and modulates the downlink signal onto the first optical carrier to form the downlink transmission signal. In one embodiment, the OLT transmitter 114 may comprise an encoding module 117, which can be used to perform space-time encoding on the downlink transmission signal to form a space-time encoded signal. Through space-time encoding, it enables single polarization heterodyne detection on the side of the optical network unit 120, which is insensitive to polarization and thus helps reduce the complexity of the optoelectronic components on the side of the optical network unit 120. This will be described in detail below.

The coupler 116 is connected to both the optical carrier generator 112 and the OLT transmitter 114, and can be used to couple the second optical carrier from the optical carrier generator 112 with the downlink transmission signal from the OLT transmitter 114 for downlink transmission. For example, the downlink transmission signal can be transmitted to the corresponding optical network unit 120 or end user through an optical circulator and a downlink optical fiber.

The OLT receiver 118 is connected to the optical carrier generator 112 and can be configured to perform coherent detection on the received uplink signal using a third optical carrier. For example, OLT receiver 118 can receive the uplink optical signal from optical network unit 120 through an optical circulator and perform coherent detection on the uplink optical signal using a third optical carrier. In one embodiment, the receiver may have the fully coherent receiver structure shown in Figure 1, or may adopt receiver structures such as single polarization heterodyne. Although Figure 2 shows OLT receiver 118 and OLT transmitter 114 separately, it can be understood that OLT receiver 118 and OLT transmitter 114 can be integrated to form an OLT transceiver for implementing transmission and reception operations.

As for the optical network unit ONU 120, it comprises an ONU receiver 122, a carrier regenerator 124, and an ONU transmitter 126. The ONU receiver 122 is used for signal detection and processing of downlink optical signals. For example, it may receive the downlink signal modulated on the first optical carrier and use the local oscillator signal generated by the carrier regenerator 124 to perform coherent detection on the downlink signal, thereby obtaining the electrical signal carrying data information. As shown in Figure 2, the carrier regenerator 124 is electrically connected to the ONU receiver 122, and it can receive a second optical carrier, generate a local oscillator signal based on the second optical carrier, and provide the local oscillator signal to the detection module in the ONU receiver 122 for coherent detection. According to the embodiments of the present disclosure, the carrier regenerator 124 receives the optical carrier from the OLT 110 and uses it as a local oscillator signal, so that the ONU 120 no longer needs to configure a local oscillator, and thereby saving hardware costs.

The ONU transmitter 126 is also connected to the carrier regenerator 124, and it can be configured to use the local oscillator signal generated by the carrier regenerator 124 to load the uplink signal for uplink transmission. In connection with the previous description, according to the embodiments of the present disclosure, the signal generated by the carrier regenerator 124 assists the reception of downlink signals and the transmission of uplink signals for the optical network unit ONU, which effectively reduces hardware space and significantly lowers costs.

The technical solution of embodiments of the present disclosure can be applied to various Ethernet passive optical networks and gigabit passive optical networks. For example, by performing heterodyne coherent detection on the ONU side, high-speed (e.g. 200 Gb/s) GPON can be achieved. In addition, for 1: n optical network system (n can be, e.g. 64), only the optical carrier generator needs to be set up on the OLT side, without the need to configure expensive laser sources on the ONU, which can significantly reduce hardware deployment costs.

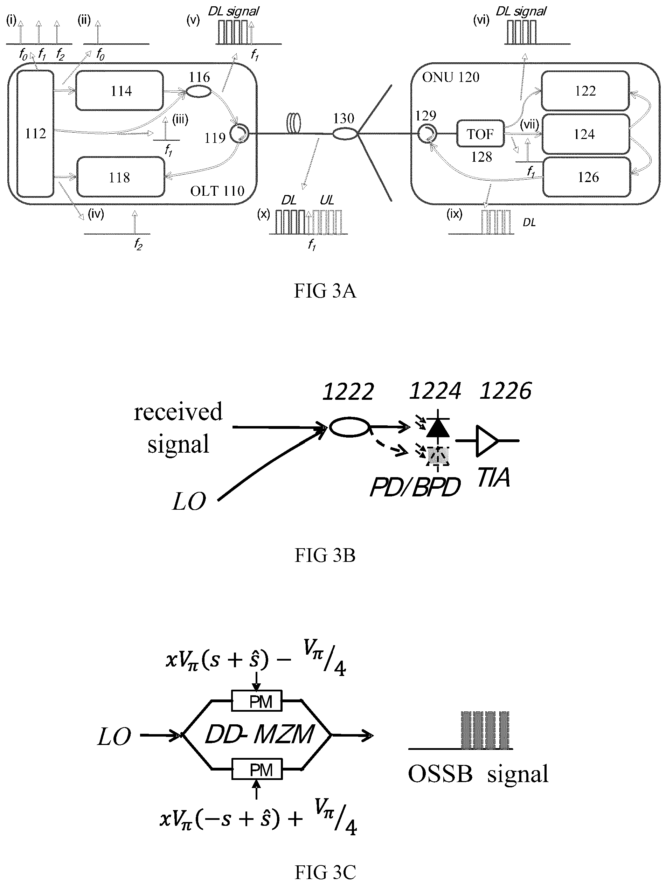

Figure 3A shows a schematic diagram of a passive optical network communication system according to an exemplary embodiment of the present disclosure, which more specifically illustrates the structural composition and working principle of the communication system of Figure 2. For the convenience of description, the same or similar components will be labeled with the same reference numerals as Figure 2. At the same time, in order to more clearly describe the innovation of the present disclosure, the arrangement and function of some components that are the same as Figure 2 will be briefly described. In Figure 3A, similarly, only one OLT 110 and one ONU 120 are shown, but it can be understood that OLT 110 can communicate with multiple ONUs through an optical distribution network, in which a splitter 130 is shown in the figure.

As shown in Figure 3A, the optical carrier generator 112 can use an optical frequency comb generation device, which can generate multiple optical frequency combs located in different bands, such as the first optical carrier (frequency f₀), the second optical carrier (frequency f₁), and the third optical carrier (frequency f₂) with different frequencies, and provide them to the OLT transmitter 114, coupler 116, and OLT receiver 118, respectively. Wherein, the first optical carrier will be used to carry downlink signals, the second optical carrier can serve as the main optical source to remotely regenerate local oscillator (LO) signals on the ONU side, and the third optical carrier will be used for coherent detection of uplink signals. In one embodiment, the frequency f₁ of the second optical carrier may be between the frequency f₀ of the first optical carrier and the frequency f2 of the third optical carrier, which helps to achieve frequency spacing between uplink and downlink signals, thereby reducing crosstalk between signals. This will be described in detail later.

The OLT transmitter 114 receives the first optical carrier and can also receive data signals from external data sources (such as the Internet), which are used to modulate the first optical carrier to generate downlink optical signals. The transmitter 114 may modulate the downlink data using orthogonal frequency division multiplexing (OFDM), orthogonal phase shift keying (QPSK), orthogonal amplitude modulation (QAM), or other suitable modulation formats to carry the information comprised in the downlink data on a high-frequency (f₀) carrier.

In one embodiment, the OLT transmitter 114 can also perform polarization and time dimensional space-time encoding (Alamouti encoding) on the modulated signal to form a space-time encoded signal and output it to the coupler 116. Specifically, the downlink data is redundantly encoded onto multiple different polarization states, with a signal at each polarization state carrying the information comprised in the downlink data. In this way, the coherent receiver on the ONU side can receive optical signals at any polarization state and decode them to obtain the information carried by the signal. That is to say, the coherent receiver is not sensitive to the polarization state of the received signal, so heterodyne detection can be used, which helps simplify the optoelectronic assembly of the ONU side receiver.

The coupler 116 has two input ports and one output port. One of input ports is used to receive the downlink signal output by the OLT transmitter 114, while the other one is used to receive the second optical carrier output by the optical frequency comb generator 112, and the output port is used to output the coupled optical signal. The optical coupler (optocoupler) 116 is further connected to the backbone fiber through the circulator 119 and transmits the downlink signal.

The OLT receiver 118 is also connected to the circulator 119 to receive uplink information, that is, the circulator 119 realizes bidirectional communication between the OLT 110 and the ONU 120, configured to connect the OLT transmitter 114 to the optical fiber when sending downlink signals, and connect the OLT receiver 118 to the optical fiber when receiving uplink signals. Upon receiving the uplink signal, the OLT receiver 118 can use the third optical carrier received from the optical frequency comb generator 112 to perform coherent detection on the uplink signal, in order to obtain the data information carried in the uplink signal. In one embodiment, the frequency of the uplink signal is close to or equal to the frequency f₂ of the third optical carrier, which facilitates coherent detection.

The downlink signal is transmitted through optical fiber to the circulator 129 on the ONU 120 side, which functions similarly to the circulator on the OLT side and will not be further described here. The adjustable optical filter 128 is connected to the circulator 129 and configured to filter out optical signals of a specified wavelength or frequency from the received downlink signal. In one embodiment, the adjustable optical filter 128 can be implemented using adjustable silicon-based filters, adjustable liquid crystal filters, etc. As shown in the figure, it can filter out the downlink signal modulated on the first optical carrier with frequency f₀ and send it to the ONU receiver 122, and filter out the second optical carrier with frequency f₁ and send it to the carrier regenerator 124.

The carrier regenerator 124 is connected to the ONU receiver 122 and the ONU transmitter 126, and it can perform procession such as filtering, amplifying on the received second optical carrier to use it as the local oscillator optical signal on the ONU side, and provide it to the ONU receiver 122 and the ONU transmitter 126. In one embodiment, the carrier regenerator 124 can use Fabry Perot laser diodes (FP-LD) or optical amplifiers (the specific arrangement will be described later), which means that expensive lasers such as external cavity lasers (ECL) do not need to be configured as local optical source devices in the ONU 120, thereby significantly saving hardware costs on the ONU side.

The ONU receiver 122 is connected to the carrier regenerator 124 and receives the local oscillator signal provided by the carrier regenerator 124 for coherent detection. Figure 3B shows a schematic structural diagram of a simplified coherent receiver. As shown in Figure 3B, the coherent receiver is mainly composed of an optical coupler 1222, a photodetector 1224, and a transimpedance amplifier 1226. The optical coupler 1222 (such as a 3dB coupler) has two input terminals that respectively receive the downlink optical signal and the local oscillator light from the carrier regenerator 124. After coupling, the two signals are input to a balanced photodetector (BPD) composed of two photodetectors (PDs) with the same photoelectric performance, and after beat frequency detection, two electrical signals are obtained. The transimpedance amplifier 1226 can amplify the electrical signals for convenience of subsequent signal processing. Alternatively, a single photodetector can be used instead of a balanced photodetector, which can further reduce the structural composition of the receiver and lower hardware costs.

The obtained electrical signal can be converted into data information carried in the downlink signal through analog-to-digital conversion and digital signal processing. For example, signal down conversion, space-time packet decoding, data demodulation, etc. are performed to recover the information comprised in the downlink data. It should be noted that for the embodiments of the present disclosure, due to the use of the optical frequency comb generator 112 and the carrier regenerator 124 on the OLT 110 and ONU 120 sides, the frequency difference between the space-time encoded signal and the local oscillator optical signal is fixed for the coherent receiver of ONU 120. Therefore, frequency offset compensation operation is not required in digital signal processing, thereby reducing computational complexity, improving processing efficiency, and can be advantageously applied to uplink burst signal detection.

The ONU transmitter 126 is electrically connected to the carrier regenerator 124, and it can receive the local oscillator optical signal generated by the carrier regenerator 124 and load the uplink signal for uplink transmission. That is to say, the local oscillator optical signal generated by the carrier regenerator 124 based on the second optical carrier received from OLT 110 can be used not only for coherent receiver 122 but also for generating the uplink signal of ONU transmitter 126.

In one embodiment, the uplink signal is an optical single sideband (OSSB) signal. As shown in Figure 3A, the frequency range of the uplink signal and the frequency range of the downlink signal are located on two sides of the second optical carrier frequency f₁, so that the wavelength of the uplink signal and the wavelength of the downlink signal in the optical network are separated without overlapping, which can avoid mutual interference caused by reflected noise when the downlink and uplink signals are transmitted through the same optical fiber.

Figure 3C shows a schematic structural diagram of a simplified OSSB transmitter. As shown in Figure 3C, the ONU transmitter 126 comprises a dual drive Mach Zehnder modulator (DD-MZM) configured to generate an uplink signal by modulating the local oscillator signal by an electrical signal. In one embodiment, the Mach Zehnder modulator has two phase modulators (PMs), each driven by two different electrical signals, wherein one driving signal is xV_{π}(s+*ŝ*)- V_{π}/4, and the other driving signal is xVπ(-s+*ŝ*)+ V_{π}/4, where s represents the original data electrical signal, *ŝ* represents the Hilbert transform of the original data electrical signal, Vπ represents the half wave voltage of DD-MZM, specifically the voltage difference required to drive the PM to adjust the phase of the optical carrier from 0 to 180 °, and x represents a normalization coefficient. Using two driving signals, DD-MZM adjusts the optical carrier signal (i.e., LO) from carrier regenerator 124 to generate an optical single sideband signal. The optical single sideband signal can be output from the output end of DD-MZM and sent uplink to the OLT 110 side via the circulator 129.

According to the technical solution of some embodiments of the present disclosure, the structure of the coherent receiving and transmitting device is simplified, the expensive local oscillator equipment is eliminated, and the algorithm for digital signal processing is optimized, thus enabling the deployment of high-speed PON systems in a more economical manner.

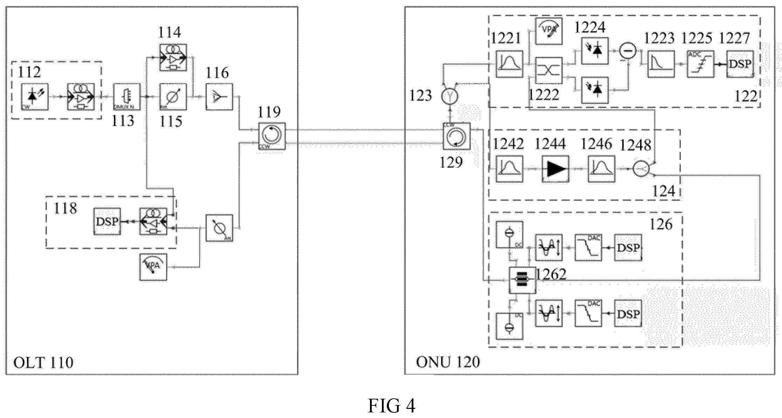

Figure 4 shows a simulation model diagram of a passive optical network according to an exemplary embodiment of the present disclosure, which can be used to verify the feasibility and performance of the embodiments of the present disclosure. Wherein, the simulation is implemented using VPI software, and the digital signal processing algorithm is implemented by using Matlab software. The structural composition of the optical network in Figures 2-3 is shown more specifically in Figure 4. For the convenience of description, the same or similar components will be labeled with the same reference numerals as in Figures 2-3. At the same time, in order to more clearly describe the innovation of the present disclosure, the arrangement and function of some elements that are the same as in Figures 2-3 will be briefly described.

As shown in Figure 4, the optical line terminal OLT 110 mainly comprises an optical frequency comb generator 112, an OLT transmitter 114, a coupler 116, and an OLT receiver 118. In one embodiment, the optical frequency comb generator 112 may comprise components such as a signal source, a modulator, and an optical filter. The source signal (e.g., a 40 GHz sine signal) emitted by the signal source is amplified by an electrical amplifier (e.g., a 40 GHz electrical amplifier) and then can be used to drive the modulator. The optical filter can obtain an optical frequency comb of a predetermined frequency as needed. For example, the laser emitted from an external laser is modulated by a modulator to produce optical frequency combs, the amounts of which can be changed by adjusting the parameters of the modulator. After passing through an optical filter, an optical frequency comb with the desired frequency can be obtained, and optionally, an optical amplifier can be comprised to amplify the generated optical frequency comb. For example, the optical frequency comb generator 112 can be used to generate a frequency comb with three optical carriers, typically with frequencies of 193.1 THz (f₀), 193.14 THz (f₁), and 193.18 THz (f₂), where frequency f₁ is located between frequency f₀ and frequency f₂.

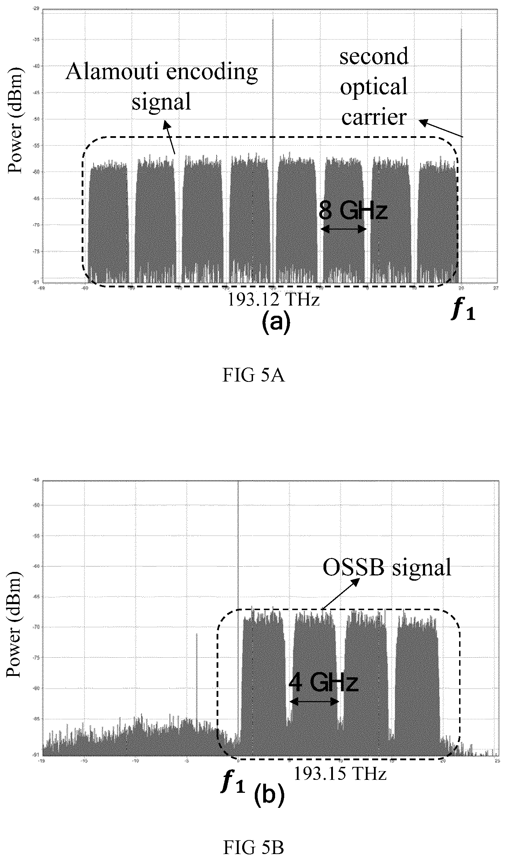

The wavelength division multiplexer 113 is connected to the optical frequency comb generator 112, and can direct three optical carrier waveguides to different branches, wherein the first optical carrier (frequency f₀) is sent to the OLT transmitter 114. In one embodiment, the OLT transmitter 114 may be a dual polarization coherent optical transmitter that modulates the first optical carrier using a digital subcarrier multiplexing (DSCM) signal with Alamouti encoding, thereby modulating the optical signal onto the first optical carrier to form a downlink transmission signal. Figure 5A shows a schematic optical spectrum diagram of a downlink Alamouti encoded signal, where the encoded DSCM signal is modulated on a first optical carrier with a center frequency of 193.1 THz (f₀), and the signal has 8 subcarriers (SC), each carrying downlink data with 16 quadrature amplitude modulation (QAM) with a bandwidth of 8 GHz, achieving a data rate of 256 Gb/s. The frequency gap between subcarriers is 2 GHz, so the total occupied bandwidth is 80 GHz, and the spectral range of all subcarriers carrying downlink data is located on the frequency (f₁) side of the second optical carrier.

In one embodiment, the optical line terminal OLT 110 further comprises an optical attenuator 115, which is connected to the optical frequency comb generator 112 and arranged in parallel with the OLT transmitter 114 between the optical frequency comb generator 112 and the optical coupler 116. The wavelength division multiplexer 113 guides the second optical carrier (frequency f₁) to the optical attenuator 115 to attenuate the second optical carrier. For example, the attenuation rate can be controlled so that the power ratio of the second optical carrier to the downlink signal is equal to or lower than a threshold, thereby avoiding or reducing interference with the transmission of the downlink signal.

The coupler 116 receives the downlink signal output by the OLT transmitter 114 and the attenuated second optical carrier output by the attenuator, and outputs the coupled optical signal (such as the combined signal shown in Figure 5A) to the circulator 119, which transmits the downlink signal to the corresponding ONU 120 through an optical fiber (such as a 20 km standard single-mode fiber SSMF).

In one embodiment, the wavelength division multiplexer 113 also directs a third optical carrier (frequency f₂) to the OLT receiver 118 for coherent detection of uplink signals. OLT receiver 118 is connected to circulator 119, and can receive uplink signals and demodulate the signals. The OLT receiver 118 may have the fully coherent receiver or single polarization internal difference receiver structure shown in Figure 1, or may adopt the single polarization heterodyne receiver structure shown in Figure 3B. The demodulated signal is processed by DSP of the OLT receiver after analog-to-digital conversion (ADC) to recover the data information carried in the uplink signal.

Continuing referring to Figure 4, the optical network unit ONU 120 mainly comprises an ONU receiver 122, a carrier regenerator 124, and an ONU transmitter 126. The downlink signal can be transmitted to the ONU receiver 122 and the carrier regenerator 124 through the circulator 129 and the beam splitter 123.

In the carrier regenerator 124, the received optical wave signal is first filtered by an optical filter 1242 to select out the second optical carrier signal. Since the second optical carrier is attenuated at the OLT 110 end, the carrier regenerator 124 may comprise an optical amplifier 1244 (e.g., a semiconductor optical amplifier SOA) to amplify the second optical carrier to have sufficient optical power for being the local oscillator signal. The amplified second optical carrier can be filtered again through an optical filter 1246 to obtain a high amplitude, narrow bandwidth local oscillator signal, which is then provided to the receiver 122 and transmitter 126 of the ONU through a beam splitter 1248. In this way, expensive optical source equipment such as external cavity lasers (ECLs) used in conventional coherent receivers are eliminated in ONU 120, thereby achieving significant cost-effectiveness.

In the ONU receiver 122, the downlink signal is first filtered by an optical filter 1221 to select the Alamouti encoded signal carried on the first optical carrier, and then output to an optical coupler 1222. The optical coupler 1222 can also receive the local oscillator signal from the carrier regenerator 124, and couple the downlink signal with the local oscillator signal. The coupled optical signal is coherently detected by the photodetector 1224 to obtain an electrical signal. In one embodiment, the ONU receiver 122 may further comprise an amplifier (e.g., a transimpedance amplifier), a filter 1223 to amplify and filter the electrical signal. Then the amplified electrical signal is converted into a digital signal through an analog-to-digital converter 1225. Finally, the digital signal is processed by a digital signal processor DSP 1227 to obtain the information carried in the downlink signal. For example, DSP 1227 can perform signal down conversion, space-time packet decoding, data demodulation, etc. to recover the information comprised in the downlink data. For the coherent receiver of ONU 120, the frequency difference between its Alamouti encoded signal and the local oscillator optical signal is fixed, so frequency offset compensation operation can be omitted in digital signal processing, thereby reducing computational complexity and improving processing efficiency.

For the ONU transmitter 126, in order to avoid mutual interference caused by reflected noise during bidirectional signal transmission in optical fibers, optical single sideband (OSSB) modulation technology can be applied to the uplink signal. For example, the uplink signal can be modulated to be in a spectrum range greater than frequency f₁. Figure 5B shows a schematic optical spectrum diagram of the uplink OSSB signal, wherein the encoded DSCM signal is modulated on a specific optical carrier with a center frequency of 193.15 THz, and the signal has 4 subcarriers (SC), each carrying uplink data of 16 QAM format with a bandwidth of 4 GHz, and can achieve an uplink data rate of about 64 Gb/s. As shown in Figure 5B, the spectral ranges of all subcarriers carrying uplink data are located on the frequency (f₁) side of the second optical carrier. In connection with Figure 5A, it can be seen that the spectral ranges of the uplink signal and that of the downlink signal do not overlap, thus avoiding the problem of mutual interference between uplink and downlink signals.

In one embodiment, the ONU transmitter 126 comprises a dual drive Mach Zehnder modulator (DD-MZM) 1262 that can receive a local oscillator signal from the carrier regenerator 124 and load an uplink data signal using the local oscillator signal. After the processed data is converted to analog by DAC, and then subjected to Hilbert transform and other processing, two different electrical signals are thus formed to drive DD-MZM 1262. DD-MZM 1262 adjusts the local oscillator signal (LO) from carrier regenerator 124, thereby generating an optical single sideband signal carrying uplink data information. This signal can be sent uplink to the OLT 110 side via the circulator 129. The specific signal processing can be referred to the relevant description of Figure 3C, which will not be repeated here.

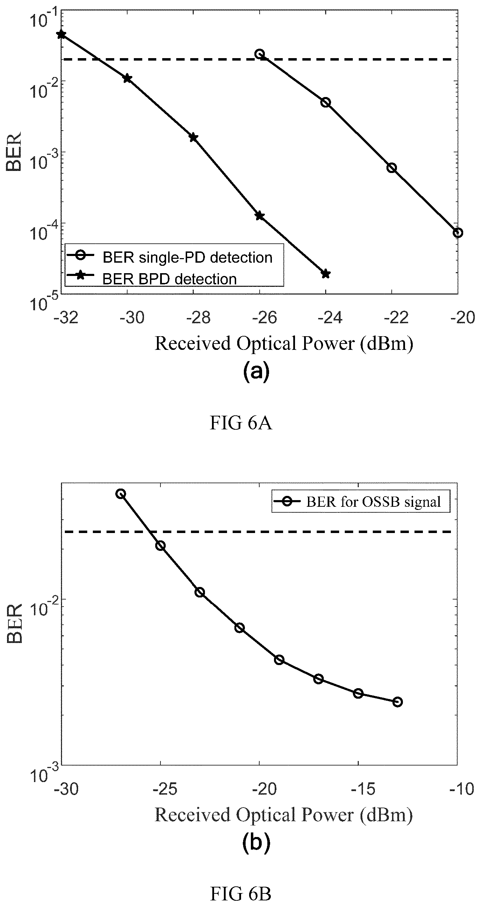

Figures 6A and 6B respectively show the schematic diagrams of coherent detection simulation for downlink Alamouti encoded signals and uplink OSSB signals, wherein as for the downlink signal, heterodyne coherent detection based on single photodetector (PD) and balanced photodetector (BPD) is used, while as for the uplink signal, fully coherent detection is used. In the figures, the horizontal axis represents the received optical power (dBm), and the vertical axis represents the bit error rate (BER) of the received data on the ONU and OLT sides, respectively, namely showing the BER curve of the bit error rate as a function of the received optical power.

Referring to Figure 6A, assuming that the threshold level of bit error rate after Forward Error Correction (FEC) is 2E-2, for downlink transmission, coherent receivers based on BPD and single PD both have high reception sensitivity, which are -31 dBm and -25.5 dBm, respectively. The 5.5 dB performance difference between the two detection methods is due to the relative intensity noise (RIN) of the coupler (3dB) and the local oscillator signal. Therefore, the appropriate receiver structure can be selected based on the power budget of the network, such as using a simplified structure based on a single PD if the power budget allows. Referring to Figure 6B, for uplink transmission, although the frequency of the effective subcarriers is set within the range of f₁ and f₁+20GHz, a reception sensitivity of approximately -26 dBm can still be achieved.

According to the technical solution of the embodiments of the present disclosure, heterodyne coherent detection, remote optical carrier regeneration, and optical single sideband signal modulation technology are integrated, the structures of coherent receiving and transmitting devices used in passive optical network systems are simplified, costly local oscillator equipment are eliminated, and the algorithm for digital signal processing on both sides of OLT and ONU receivers is optimized. Therefore, high data rate (200 Gb/s) optical access networks can be deployed in a more economical way.

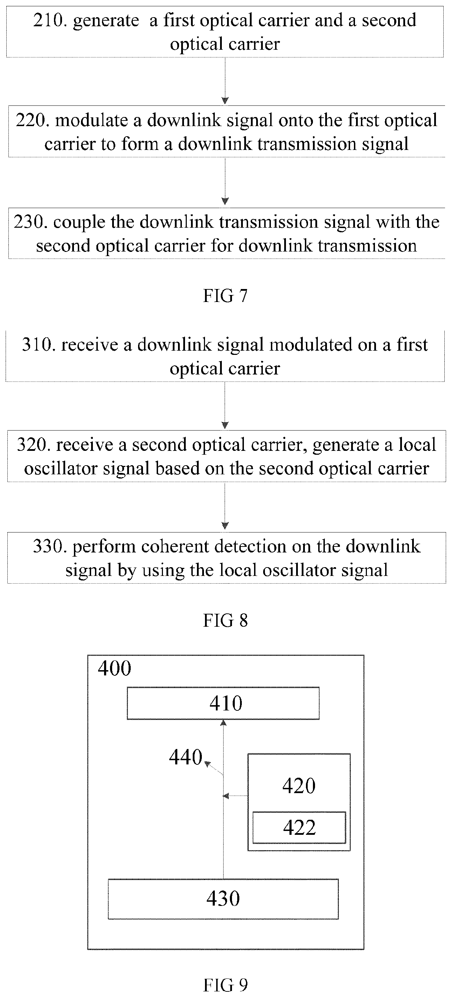

Figure 7 shows a flowchart of method 200 implemented at the optical line terminal according to an embodiment of the present disclosure. It can be understood that method 200 can be implemented, for example, at the optical line terminal OLT 110 as shown in Figures 2 to 4. For the convenience of description, method 200 will be explained below in conjunction with Figures 2 to 4.

In step 210, the optical carrier generator can generate a first optical carrier and a second optical carrier. In one embodiment, the optical carrier generator can further generate a third optical carrier. In one embodiment, an optical frequency comb generator can be used to generate the first optical carrier, the second optical carrier, and the third optical carrier.

In step 220, the OLT transmitter may modulate the downlink signal onto the first optical carrier to form a downlink transmission signal. In one embodiment, after signal modulation, the downlink transmission signal can also be subjected to space-time encoding to form a space-time encoded signal.

In step 220, an optical coupler may couple the downlink transmission signal with the second optical carrier for downlink transmission. In one embodiment, an attenuator is used to attenuate the second optical carrier before inputting it into the coupler.

In some embodiments, method 200 may further comprise performing coherent detection of the received uplink signal using the third optical carrier.

Figure 8 shows a flowchart of method 300 implemented at an optical network unit according to an embodiment of the present disclosure. It can be understood that method 300 can be implemented, for example, at the optical network unit ONU 120 shown in Figures 2 to 4. For the convenience of description, method 300 will be explained below in conjunction with Figures 2 to 4.

In step 310, the ONU receiver may receive the downlink signal modulated on the first optical carrier.

In step 320, the carrier regenerator may receive a second optical carrier and generate a local oscillator signal based on the second optical carrier.

In one embodiment, step 320 may comprise: filtering the received optical wave signal to select out the second optical carrier; and amplifying the second optical carrier and using the amplified second optical carrier as the local oscillator signal.

In step 330, coherent detection of the downlink signal is performed using the local oscillator signal.

In one embodiment, step 330 may comprise: receiving the downlink signal and the local oscillator signal, and coupling the downlink signal with the local oscillator signal; and detecting the coupled optical signals to obtain electrical signals.

In one embodiment, method 300 may further comprise: amplifying the electrical signal; converting the amplified electrical signal into a digital signal; and processing the digital signal to obtain the information carried in the downlink signal.

In some embodiments, method 300 may further comprise: loading an uplink signal using the local oscillator signal. In one embodiment, this step may comprise: generating an uplink signal by modulating the local oscillator signal with an electrical signal. In one embodiment, the uplink signal is an optical single sideband (OSSB) signal.

Figure 9 shows a structural block diagram of an optical network device 400 according to an exemplary embodiment of the present disclosure. The optical network device 400 can be implemented as the optical line terminal OLT 110 or the optical network unit ONU 120 described above. As shown in Figure 9, the network device 400 may comprise one or more processors 410, one or more memories 420, and one or more network interfaces 430, which can communicate with each other through a bus system 440.

Processor 410 may be, for example, a central processing unit (CPU), a general-purpose processor, a controller, a digital signal processor (DSP), an application specific integrated circuit (ASIC), a field programmable gate array (FPGA) or other programmable logic devices, transistor logic devices, hardware components, or any combination thereof. The processor 410 can execute instructions in the memory 420 and/or exchange data with it, thereby controlling other components coupled through the bus 440 to cooperate and perform the methods, steps, or functions described above.

Memory 420 may comprise various forms of storage media or be implemented using any suitable data storage technology, such as volatile and/or non-volatile memory. Volatile memory can comprise, but is not limited to, random access memory (RAM), cache memory, etc. Non-volatile memory can comprise but is not limited to read-only memory (ROM), hard disk, flash memory, etc. The term 'non-volatile' herein refers to the limitation of the medium itself (i.e. tangible rather than signal), rather than the limitation of data storage persistence (e.g. RAM or ROM). In addition, at least one memory 420 may comprise, but is not limited to, electronic, magnetic, optical, electromagnetic, infrared, or semiconductor systems, apparatuses, devices, or any combination thereof.

The memory 420 may comprise computer instructions 422, which can be executed by the processor 410, so that the processor 410 can control other components coupled through the bus 440 to cooperate and perform the methods, steps, or functions related to the optical line terminal OLT 110 or the optical network unit ONU 120 described above.

Network interface 430 can be a device having network data reception and transmission functions, such as a receiving circuit, receiver, I/O interface, etc.

According to exemplary embodiments of the present disclosure, any one of (at least one) processor, (at least one) memory, and (at least one) interface, as well as any one of the units/devices shown, may be implemented as a separate module, chip, chipset, circuit, etc., or one or more of them may be implemented as a common module, chip, chipset, circuit, etc., respectively.

Some example embodiments also provide computer program code or instructions that, when executed by one or more processors, may cause a device or apparatus to perform the processes described above. The computer program code used to execute the process of the example embodiments can be written in any programming language already known or which will be developed in the future, such as Java, C++, C, and Assembler. Computer program code can be provided to one or more processors or controllers of a general-purpose computer, specialized computer, or other programmable data processing device, such that when the program code is executed by the processor or controller, it enables the implementation of the functions/operations specified in the flowchart and/or block diagram. Program code can be executed entirely on local computing devices, partially executed on local computing devices, executed as a standalone software package, executed partially on local computing devices and partially on remote computing devices, or entirely on remote computing devices or servers.

Some example embodiments further provide a computer program product or computer readable medium storing computer program code or instructions that, when executed by a processor, cause an optical line terminal or optical network unit to perform the processing methods, steps, or functions described above. Computer readable media can be any tangible medium that can contain or store programs for being used by instruction execution systems, devices, or equipment or being used in combination with them. Machine readable media can be machine readable signal media or machine readable storage media. Machine readable media may comprise, but are not limited to, electronic, magnetic, optical, electromagnetic, infrared, or semiconductor systems, devices, or equipment, or any suitable combination thereof. More specific examples of machine-readable storage media will comprise electrical connections with one or more wires, portable computer floppy disks, hard disks, a random access memory (RAM), a read-only memory (ROM), an erasable programmable read-only memory (EPROM or flash memory), fiber optics, portable optical disc read-only memory (CD-ROM), optical storage devices, magnetic storage devices, or any suitable combination thereof.

The basic principles of the present disclosure have been described above in conjunction with the embodiments. However, it should be pointed out that the advantages, benefits, effects, etc. mentioned in the present disclosure are only examples and not limitations, and cannot be considered as necessary for various embodiments of the present disclosure. In addition, the specific details disclosed above are only for the purpose of illustration and ease of understanding, rather than for limitation. The above details do not limit the present disclosure to necessarily adopt the specific details mentioned above for implementation.

The terms "component," "module," "system," etc. used in this disclosure are used to refer to computer related hardware, software, firmware, dedicated circuits or logic, general-purpose hardware or controllers, or other computing devices, or some combination thereof. In addition, modifiers such as "first" and "second" throughout the specification and claims are typically intended to distinguish different elements, operations, etc. with each other, rather than emphasizing any importance or ranking.

Although some embodiments have been described, these embodiments have been given by way of example and are not intended to limit the scope of the present disclosure. Various modifications, substitutions, and changes may be made to the form of the methods and systems described herein without departing from the spirit of the present disclosure. Therefore, it should be understood that the appended claims and their equivalents are intended to cover these forms or modifications falling within the scope and spirit of the various embodiments of the present disclosure.

## Claims

1. An optical line terminal, OLT, (110) comprising:
an optical carrier generator (112) configured to generate at least a first optical carrier and a second optical carrier;
a transmitter (114) connected to the optical carrier generator (112), and configured to modulate a downlink signal onto the first optical carrier to form a downlink transmission signal; and
an optical coupler (116) for coupling the downlink transmission signal with the second optical carrier for downlink transmission
, wherein for example the optical carrier generator (112) is further configured to generate a third optical carrier, and the optical line terminal (110) further comprises:
a receiver (118) connected to the optical carrier generator (112), and configured to perform a coherent detection on a received uplink signal by using the third optical carrier
, wherein for example the transmitter (114) comprises:
an encoding module for performing space-time encoding on the downlink transmission signal to form a space-time encoded signal.

2. An optical network unit, ONU, (120) comprising:
a receiver (122), configured to receive a downlink signal modulated on a first optical carrier; and
a carrier regenerator (124), configured to receive a second optical carrier and generate a local oscillator signal based on the second optical carrier,
wherein, the receiver (122) is connected to the carrier regenerator (124) and configured to perform coherent detection on the downlink signal by using the local oscillator signal.

3. The optical network unit (120) of claim 2, further comprising:
a transmitter (126) connected to the carrier regenerator (124) and configured to load an uplink signal by using the local oscillator signal
, wherein for example the uplink signal is an optical single sideband, OSSB, signal.

4. The optical network unit (120) of any of claims 2 to 3, wherein A) the receiver (122) comprises:
an optical coupler (1222) for receiving the downlink signal and the local oscillator signal, and coupling the downlink signal with the local oscillator signal;
a photodetector (1224) connected to the optical coupler (1222), for detecting the coupled optical signal to obtain an electrical signal;
an amplifier (1226) for amplifying the electrical signal;
an analog-to-digital converter (1225) for converting the amplified electrical signal into a digital signal; and
a digital signal processor, DSP, (1227) for processing the digital signal to obtain the information carried in the downlink signal
, and/or wherein B) the carrier regenerator (124) comprises:
a filter (1242) for filtering the received optical wave signal to select out the second optical carrier; and
an optical amplifier (1244) connected to the filter (1242) for amplifying the second optical carrier.

5. The optical network unit (120) of claim 3, wherein the transmitter (126) comprises a Mach Zehnder modulator, MZM, (1262) configured to generate an uplink signal by modulating the local oscillator signal with an electrical signal.

6. A method for processing signal at an optical line terminal, OLT, (110) comprising:
generating (210) a first optical carrier and a second optical carrier;
modulating (220) a downlink signal onto the first optical carrier to form a downlink transmission signal; and
coupling (230) the downlink transmission signal with the second optical carrier for downlink transmission
, wherein for example the method further comprises:
generating a third optical carrier and performing a coherent detection on a received uplink signal by using third optical carrier
, wherein for example the method further comprises:
performing space-time encoding on the downlink transmission signal to form a space-time encoded signal.

7. A method for processing signal at an optical network unit, ONU, (120), comprising:
receiving (310) a downlink signal modulated on a first optical carrier;
receiving (320) a second optical carrier and generating a local oscillator signal based on the second optical carrier; and
performing (330) coherent detection on the downlink signal by using the local oscillator signal.

8. The method of claim 7, further comprising:
loading an uplink signal by using the local oscillator signal.

9. The method of claim 7 or 8, wherein using the local oscillator signal for coherent detection of the downlink signal comprises:
receiving the downlink signal and the local oscillator signal, and coupling the downlink signal with the local oscillator signal; as well as
detecting the coupled optical signal to obtain an electrical signal
, wherein for example the method further comprises:
amplifying the electrical signal;
converting the amplified electrical signal into a digital signal; and
processing the digital signal to obtain the information carried in the downlink signal.

10. The method of any of claims 7 to 9, wherein generating a local oscillator signal based on the second optical carrier comprises:
filtering the received optical wave signal to select out the second optical carrier; and
amplifying the second optical carrier and using the amplified second optical carrier as the local oscillator signal.

11. The method of claim 8, wherein loading an uplink signal using the local oscillator signal comprises:
generating an uplink signal by modulating the local oscillator signal with an electrical signal.

12. A communication system comprising an optical line terminal (110) of claim 1 and an optical network unit (120) of any of claims 2 to 5.

13. An apparatus comprising:
at least one processor; and
at least one memory for storing instructions, wherein the instructions, when executed by the at least one processor, cause the apparatus to at least perform a method of any of claims 6 to 11.

14. A computer readable medium storing instructions thereon, which, when executed by a processor, cause the processor to perform a method of any of claims 6 to 11.

15. A computer program product comprising instructions, which, when executed by a processor, cause the processor to perform a method of any of claims 6 to 11.
